# EUROPEAN PATENT APPLICATION

(11) **EP 3 971 737 A1**
(43) Date of publication of application: **23.03.2022**
(21) Application number: 19935052.1
(22) Date of filing: 26.06.2019
(51) Int. Cl.: G06F 17/00

(54) **GEOMETRIC MODEL-BASED EVALUATION METHOD, SYSTEM, AND APPARATUS FOR KPI IN PRODUCTION PROCEDURE**

(71) Applicant: Siemens Aktiengesellschaft, 80333 München (DE)
(72) Inventor: LI, Jing, Shanghai 201208 (CN); CHEN, Xue, Shanghai 200444 (CN); SHEN, Yi Xuan, Shanghai 200093 (CN); XU, Wei Feng, Shanghai 200940 (CN); SI, Wei Ping, Shanghai 200120 (CN); ZHANG, Xiao Song, Beijing 100102 (CN)
(74) Representative: Isarpatent
(86) International application number: PCT/CN2019/093136
(87) International publication number: WO 2020/258109

(57) **Abstract**

The present invention provides a geometric model-based evaluation method, system, and apparatus for a key performance indicator (KPI) in a production procedure. The method comprises the following steps: S1, extracting a geometric characteristic and a characteristic attribute thereof from a product model; S2, converting the geometric characteristic into a process characteristic so as to obtain the steps of a process related to a whole production procedure of producing a product, and devices corresponding to the steps of the process; and S3, based on the steps of the process related to the production procedure and the devices corresponding to the steps of the process, simulating the whole industrial manufacturing procedure of the product, and outputting the KPI of the industrial manufacturing. The present invention can evaluate the KPI of the whole industrial manufacturing procedure of the product according to the product model.

## Description

### Technical Field

The present invention relates to the field of simulations, in particular to a method, system and device for evaluating key performance indexes (KPIs) in production based on a geometric model.

### Background Art

Under the tendency of consumption upgrading, industrial manufacturing faces an ever-increasing pressure in mass deep customization and fast product iteration. Therefore, industrial manufacturers often need to make a decision to change product features for potential businesses.

However, most industrial manufacturers, for example, small and medium enterprises (SMEs), want a proper tool to help them evaluate the influence brought about by a change of geometric features of products in the whole manufacturing procedure.

Manufacturing simulation tools of the prior art face two problems. Firstly, since a variety of manufacturing simulation tools are available, the prices of these manufacturing simulation tools are very high, and SMEs often lack experience, it is not suitable for SMEs to purchase these manufacturing simulation tools. Secondly, no association exists between a product design and a manufacturing procedure. For example, we do not know how to obtain a production procedure by changing a product design. In order to coordinate the product design and the manufacturing procedure, the prior art often depends on human beings, for example, experts who are familiar with the manufacturing procedures of a plurality of products and have the professional knowledge in the art.

Most of the prior manufacturing simulation tools can respectively support product designs and manufacturing simulations. For example, the tools for product designs include NX, Pro/Engineering, Solidworks, and the tools for manufacturing simulations include Tecnomatix (including process simulate and plant simulation) and AnyLogic. These tools are designed to be applied to a specific stage of a product life cycle. The users of these tools include different roles, for example, product designers, production designers and factory engineers, and they require a lot of professional knowledge and do a lot of technical work to establish a model, execute logics and perform a simulation. These software simulation tools can output a lot of details about products and production, but they are not suitable for a fast evaluation from design to manufacturing.

Therefore, few software tools specially for linking data from different stages of a product life cycle are available in the prior art. Some of such software tools in the prior art serve as a big database for modeling and production data of all products and are also linked to trigger and run independent software, for example, NX and Tecnomatix. However, these software tools serve as collaborative tools for engineers in product life cycle projects and are not specially used for evaluating the influence brought about by a change of geometric features of products in the whole manufacturing procedure.

In addition, these industrial manufacturing software tools of the prior art cannot quickly evaluate a whole manufacturing procedure, for example, including the stages such as material preparation, processing and assembly. An industrial manufacturing evaluation mechanism, which can automatically be executed starting from the geometric model of a product and can calculate KPIs in related manufacturing, is required in the industry.

### Summary of the Invention

In a first aspect, the present invention provides a method for evaluating KPIs in production based on a geometric model, wherein the method comprises the following steps: S1. extracting a geometric feature and the feature attribute from the product model, S2. converting the geometric feature into a process feature to obtain process steps related to the whole production procedure of producing the product and the equipment corresponding to each process step, and S3. simulating the whole industrial manufacturing procedure of the product based on the process steps related to the production procedure and the equipment corresponding to each process step and outputting key performance indexes (KPIs) of the industrial manufacturing procedure.

Further, Step S2 further comprises the following steps: S21. instantiating the geometric feature into a knowledge base, S22. converting the geometric feature into a process feature according to the rules in the knowledge base, and S23. analyzing the process feature to obtain a plurality of process steps related to the production procedure of the process feature in a specific sequence and allocating equipment corresponding to each process step.

Further, the knowledge base comprises an ontology base and a rule base.

Further, the ontology base comprises classes, attributes and instances.

Further, the rules in the rule base comprise: a first relationship rule between the geometric feature and the process feature, a plurality of process steps related to the process feature and the production procedure in a specific sequence, and a second relationship rule between each process step and the corresponding equipment.

Further, Step S22 further comprises the following step: invoking the first relationship rule in the knowledge base and matching the geometric feature with the corresponding process feature based on the first relationship rule, and Step S23 further comprises the following steps: invoking the second relationship rule in the knowledge base and mapping the process feature into a plurality of process steps related to the production procedure of the process feature in a specific sequence based on the second relationship rule, and invoking the third relationship rule in the knowledge base and allocating corresponding equipment to each process step based on the third relationship rule.

In a second aspect, the present invention provides a system for evaluating KPIs in production based on a geometric model, wherein the system comprises a processor, and a memory coupled with the processor, the memory having instructions stored therein, the instructions enabling the system to evaluate KPIs in production based on a geometric model to perform actions when executed by the processor, and the actions comprising: S1. extracting a geometric feature and the feature attribute from the product model, S2. converting the geometric feature into a process feature to obtain process steps related to the whole production procedure of producing the product and the equipment corresponding to each process step, and S3. simulating the whole industrial manufacturing procedure of the product based on the process steps related to the production procedure and the equipment corresponding to each process step and outputting key performance indexes (KPIs) of the industrial manufacturing procedure.

Further, Action S2 further comprises: S21. instantiating the geometric feature into a knowledge base, S22. converting the geometric feature into a process feature according to the rules in the knowledge base, and S23. analyzing the process feature to obtain a plurality of process steps related to the production procedure of the process feature in a specific sequence and allocating equipment corresponding to each process step.

Further, the knowledge base comprises an ontology base and a rule base.

Further, the ontology base comprises classes, attributes and instances.

Further, the rule base comprises: a first relationship rule between the geometric feature and the process feature, a plurality of process steps related to the process feature and the production procedure in a specific sequence, and a second relationship rule between each process step and the corresponding equipment.

Further, Action S22 further comprises: invoking the first relationship rule in the knowledge base and matching the geometric feature with the corresponding process feature based on the first relationship rule, and Action S23 further comprises: invoking the second relationship rule in the knowledge base and mapping the process feature into a plurality of process steps related to the production procedure of the process feature in a specific sequence based on the second relationship rule, and invoking the third relationship rule in the knowledge base and allocating corresponding equipment to each process step based on the third relationship rule.

In a third aspect, the present invention provides a device for evaluating KPIs in production based on a geometric model, wherein the device comprises: an extraction module, configured to extract a geometric feature and the feature attribute from the product model, a conversion module, configured to convert the geometric feature into a process feature to obtain process steps related to the whole production procedure of producing the product and the equipment corresponding to each process step, and a simulation module, configured to simulate the whole industrial manufacturing procedure of the product based on the process steps related to the production procedure and the equipment corresponding to each process step and output key performance indexes (KPIs) of the industrial manufacturing procedure.

Further, the conversion module is further configured to: instantiate the geometric feature into a knowledge base, convert the geometric feature into a process feature according to the rules in the knowledge base, and analyze the process feature to obtain a plurality of process steps related to the production procedure of the process feature in a specific sequence and allocate equipment corresponding to each process step.

Further, the rules in the rule base comprise: a first relationship rule between the geometric feature and the process feature, a plurality of process steps related to the process feature and the production procedure in a specific sequence, and a second relationship rule between each process step and the corresponding equipment.

Further, the conversion module is further configured to invoke the first relationship rule in the knowledge base and match the geometric feature with the corresponding process feature based on the first relationship rule, and the simulation module is further configured to invoke the second relationship rule in the knowledge base and map the process feature into a plurality of process steps related to the production procedure of the process feature in a specific sequence based on the second relationship rule, and invoke the third relationship rule in the knowledge base and allocate corresponding equipment to each process step based on the third relationship rule.

In a fourth aspect, the present invention provides a computer program product, the computer program product is tangibly stored in a computer-readable medium and comprises computer executable instructions, and at least one processor is enabled to execute the method according to the first aspect of the present invention when the computer executable instructions are executed.

In a fifth aspect, the present invention provides a computer-readable medium, computer executable instructions are stored in the computer-readable medium, and at least one processor is enabled to execute the method according to the first aspect of the present invention when the computer executable instructions are executed.

By utilizing a knowledge structure which is ontological to map the design features of a product model to the production processes of the product and equipment information, the present invention can automatically generate possible process routes and required equipment from a product design. Wherein, the product can be described by use of some design features, for example, geometric features and feature attributes determined from the design model. Secondly, these features can be mapped to a production procedure in which the above-mentioned design features are potentially produced. Wherein, knowledge can continuously be created and can be extended along with time and experience. Therefore, the present invention has a wide application prospect, for example, production procedure recognition of an assembly procedure of a robotic system, in many industrial fields.

In addition, KPIs in production are automatically evaluated based on the production information obtained from a simulation. After the production route and equipment type of a specific product are obtained, a factory model can be generated in a simulation tool. Then, factory KPIs can be simulated and can automatically be calculated in the present invention. Factory KPIs include the type and quantity of the product planned to be produced. The production gap, production capacity and performance criteria from design to production can be automatically and quickly evaluated by use of the present invention.

### Brief Description of the Drawings

Fig. 1 shows the architecture of an evaluation mechanism for evaluating KPIs in production based on a geometric model according to one specific embodiment of the present invention.
Fig. 2 shows a computer aided design (CAD) model of a cup according to one specific embodiment of the present invention.
Fig. 3 shows the instantiation of an evaluation mechanism for evaluating KPIs in production based on a geometric model according to one specific embodiment of the present invention.
Fig. 4 shows the transductive deduction of an evaluation mechanism for evaluating KPIs in production based on a geometric model according to one specific embodiment of the present invention.

### Detailed Description of the Invention

The following will describe specific embodiments of the present invention in combination with the drawings.

The present invention provides a method for evaluating KPIs in production based on a geometric model. Starting from the geometric design model of a product, a plurality of key performance indexes (KPIs) of the product in the whole production procedure can be evaluated, and the influence of a change of the geometric features of the product on the KPIs in the whole production procedure of the product can be analyzed.

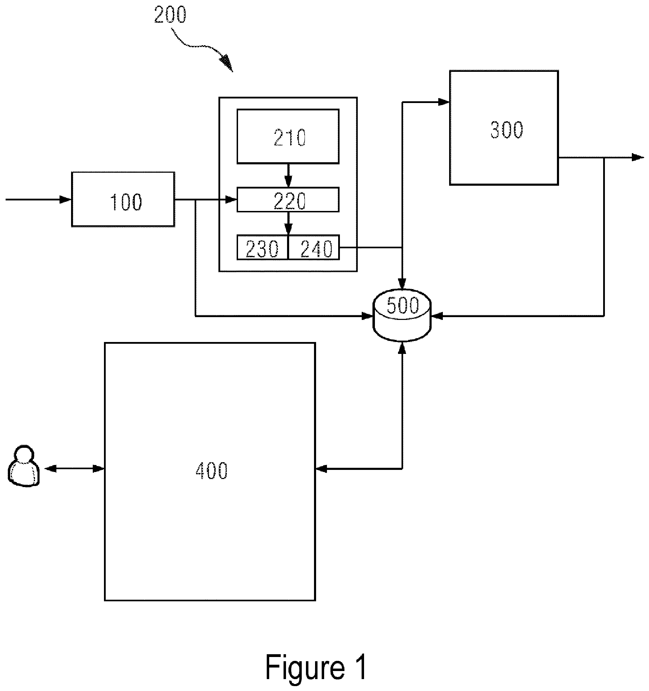

Fig. 1 shows the architecture of an evaluation system for evaluating KPIs in production based on a geometric model according to one specific embodiment of the present invention. The evaluation system for evaluating KPIs in production based on a geometric model in the present invention comprises an extraction module 100, a conversion module 200, a simulation module 300 and a generation module 400. The modules are linked together by a database 500, wherein data and information exchanged between the modules are stored in the database 500.

In a first aspect, the present invention provides a method for evaluating KPIs in production based on a geometric model.

First step S1 is performed. The extraction module 100 extracts a geometric feature and feature attribute from a product model, wherein the product model is specially a CAD model. To be specific, as shown in Fig. 1, the input of the extraction module 100 is a CAD model, and the extracted geometric features, including the face of the product model, for example, a flat face, a convex face and a concave face, can all be recognized. Wherein, the parameters of the face can automatically be generated according to different shapes of the CAD model. The relationships between a plurality of faces will also be generated at the same time. Therefore, the feature attributes of all faces can be extracted and output to the conversion module 200. The feature attributes further include the material and other design-related information required based on a specific execution.

Specifically, the extraction module 100 is configured to extract geometric features from a geometric model obtained after a product design and generate a list of geometric feature information. Specially, the geometric model is a CAD model, and the geometric features include, for example, a face and the material thereof and the relationships between a plurality of faces. Wherein, the list of the geometric feature information may be in the XML format (or other formats such as JSON). Specifically, according to one specific embodiment of the present invention, the extraction module 100 is configured to obtain the attribute parameters of a basic element from a CAD model, wherein the basic element in most cases is a face in terms of geometry. Wherein, each face has a plurality of attribute parameters, for example, shape, size, dimension and radius. A face also contains material information of a product and the relationship of the face with other faces. The geometric feature information of the geometric model of the product designs can directly be extracted from the geometric model and sorted. Therefore, a customer can directly download the CAD model of a new product design to the extraction module 100 to detect the geometric features for a further analysis.

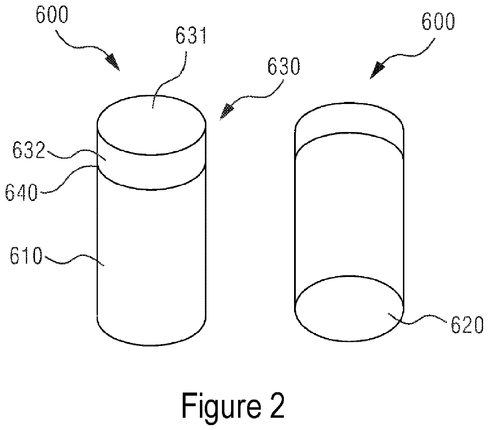

Wherein, the product to be produced in the present embodiment is a cup, and the product model of the cup 600 is shown in Fig. 2. Therefore, the geometric features of the cup 600 to be extracted in step S1 include the cup body 610, the bottom surface 620, the cup lid 630 and the sealing ring 640 between the cup body 610 and the cup lid 630. Wherein, the cup lid 630 comprises an upper surface 631 and a lid body 632.

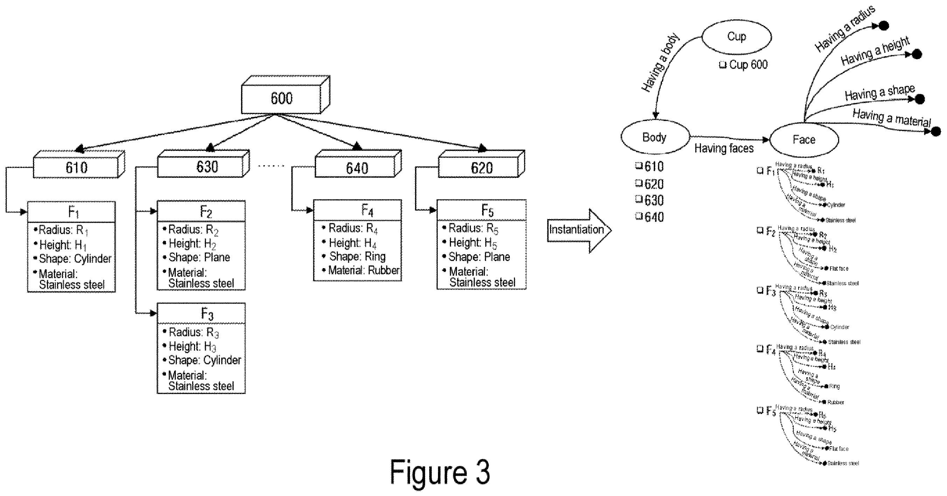

Wherein, the feature attributes of the geometric features include the radius, the height and the material. Each geometric feature corresponds to a plurality of feature attributes, and the feature attributes can be extracted and recognized when a geometric feature is extracted. As shown in Fig. 3, the geometric features of the cup 600 include the cup body 610, the bottom surface 620, the cup lid 630 and the sealing ring 640 between the cup body 610 and the cup lid 630. Specifically, the cup body 610 comprises a first face F₁ which is a cylindrical face, and the feature attributes of the geometric feature: body 610 include radius, height, shape and material. Wherein, the radius is R₁, the height is H₁, the shape is a cylinder, and the material is stainless steel. The cup lid 630 comprises a second face F₂ and a third face F₃, and the second face F₂ and the third face F₃ are a flat face and a cylindrical face, respectively. This is because the cup lid 630 comprises an upper surface 631 and a lid body 632, the upper surface 630 is a flat face and the lid body 632 is a cylindrical surface. Wherein, the feature attributes of the first face F₂ and the third face F₃ include radius, height, shape and material, respectively. Wherein, the radius of the second face F₂ is R₂, the height of the second face F₂ is H₂, the shape of the second face F₂ is a flat face, and the material of the second face F₂ is stainless steel. Wherein, the radius of the third face F₃ is R₃, the height of the third face F₃ is H₃, the shape of the third face F₃ is a flat face, and the material of the third face F₃ is stainless steel. The cup 600 further comprises the geometric feature: sealing ring 640, the sealing ring comprises a fourth face F₄, which is a ring, and the feature attributes of the fourth face F₄ include radius, height, shape and material. Wherein, the radius is R₄, the height is H₄, the shape is a ring, and the material is rubber. In addition, the cup 600 further comprises a geometric feature: bottom surface 620, and the bottom surface 620 comprises a fifth face F₅, which is a flat face. The feature attributes of the fifth face include radius, height, shape and material. Wherein, the radius is R₅, the height is H₅, the shape is a flat face, and the material is stainless steel.

Alternatively, the above-mentioned geometric features and related feature attributes are all written into an XML file.

The geometric features include point, line and plane. However, the geometric features are not the objects which a machine recognizes. Therefore, the geometric features need to be deduced into process features in the present invention, and then the process features are mapped to the process steps and the corresponding equipment.

Then, step S2 is performed. The conversion module 200 converts the geometric feature into a process feature to obtain process steps related to the whole production procedure of producing the product and the equipment corresponding to each process step. Wherein, the conversion module 200 comprises a knowledge base 210, an instantiation module 220, a recognition module 230 and a planning module 240.

Wherein, the knowledge base 210 is preset based on the domain knowledge and can continuously be updated and enriched during the implementation of the present invention. Outlined knowledge related to a product, a production procedure and an equipment field is pre-stored in the knowledge base 210. Wherein, the product definitely belongs to a specific field, all geometric features can be used to describe the product, and all production procedures are used to manufacture the product. The knowledge base comprises an ontology base and a rule base. The ontology base comprises classes, attributes and instances. Ontology is stored in the ontology base and the ontology base consists of abstract classes such as different types of faces and the logical relationships thereof. Specifically, the knowledge base 210 further comprises field abstract knowledge, process procedures and devices of a product. Wherein, all geometric features can be used to describe the product and all process procedures are necessary for the production of the product. In the ontology base, geometric features are recognized according to instances and classes are matched according to geometric features. The classes of devices, geometric features and process procedures of a product are used to describe the above-mentioned type of attribute features and are determined by the ontology.

Wherein, step S2 comprises sub-steps S21, S22 and S23.

First, sub-step S21 is performed to instantiate the geometric features into the knowledge base 210. Specifically, the instantiation module 220 obtains from the extraction module 100 the geometric features extracted from a product model and sorts the above-mentioned geometric features so that the above-mentioned technical features correspond to different types in the knowledge base 210 to get ready for the subsequent analysis and deduction. As shown in Fig. 3, the knowledge base 210 comprises an ontology base and the ontology base comprises an ontology-based product frame. In the present embodiment, the ontology base comprises the framework of a cup and contains basic information defining a cup. Specifically, the cup has a body, the body has faces, and the faces have radii, heights, shapes and materials. Therefore, the instantiation of the cup 600 into the ontology base means filling the geometric features and the feature attributes of the cup 600 in the above-mentioned framework in the ontology base to enable the cup to become an instance having contents.

As shown in Fig. 3, an instance cup 600 exists below the cup in the instantiated ontology document, the cup 600 has a plurality of bodies, including cup body 610, a bottom surface 620, a cup lid 630 and a sealing ring 640. The above-mentioned bodies have a plurality of faces, including a first face F₁, a second face F₂, a third face F₃, a fourth face F₄ and a fifth face F₅. Wherein, the first face F₁ has the radius of R₁, the first face F₁ has the height of H₁, the first face F₁ has the shape of a cylinder, and the first face F₁ has the material of stainless steel. The second face F₂ has the radius of R₂, the second face F₂ has the height of H₂, the second face F₂ has the shape of a flat face, and the second face F₂ has the material of stainless steel. The third face F₃ has the radius of R₃, the third face F₃ has the height of H₃, the third face F₃ has the shape of a cylinder, and the third face F₃ has the material of stainless steel. The fourth face F₄ has the radius of R₄, the fourth face F₄ has the height of H₄, the fourth face F₄ has the shape of a ring, and the fourth face F₄ has the material of rubber. The fifth face F₅ has the radius of R₅, the fifth face F₅ has the height of H₅, the fifth face F₅ has the shape of a flat face, and the second face F₅ has the material of stainless steel.

Then, step S22 is performed to convert the geometric feature into a process feature according to the rules in the knowledge base 210. Wherein, the rules in the rule base comprise a first relationship rule between the geometric feature and the process feature. Specifically, step S22 further comprises the following step: invoking the first relationship rule in the knowledge base and matching the geometric feature with the corresponding process feature based on the first relationship rule.

Specifically, the conversion module 200 realizes auto geometric feature recognition and computer aided process planning according to the knowledge-based technologies and eventually generates a process list document to provide subsequent applications. The conversion module 200 mainly consists of a pre-constructed knowledge base, procedure instances coming from input geometric feature data, an auto feature recognition module and a computer aided process planning module. Wherein, the instantiation module 220 is configured to extract individuals from geometric features and distribute them to the corresponding classes in the knowledge base 210 to prepare for the subsequent deduction and analysis. Therefore, the computer aided process planning module also recognizes process features through deductions and analyses and the essence of the computer aided process planning module is to find out the process features in a whole production procedure.

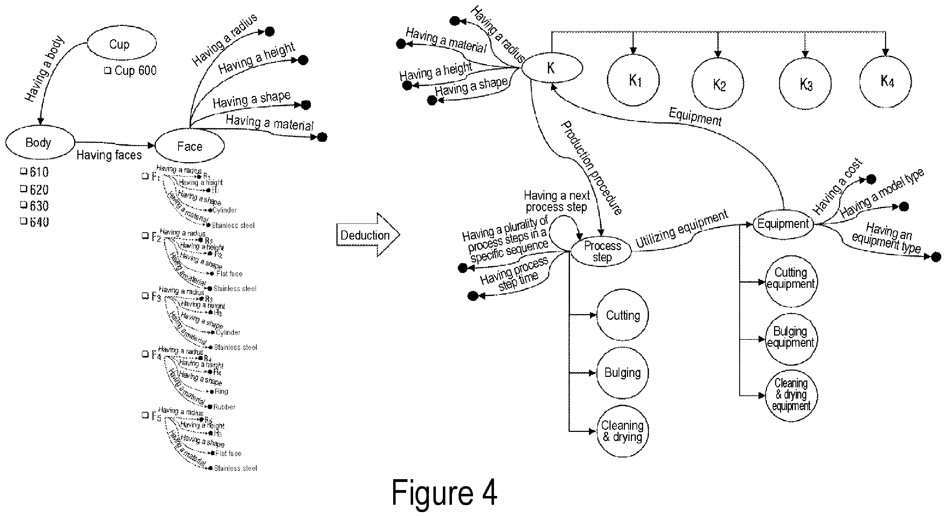

Wherein, the recognition module 230 is an auto feature recognition module and is configured to deduce the process features from the geometric features, and the essence of the recognition module is to recognize process features through deductions and analyses and map the extracted geometric features to corresponding process features. As shown in Fig. 4, process features in the ontology base are also frameworks having no content. For example, the process feature K of the cup has a radius, a height, a material and a shape. The process feature K of the cup further comprises a plurality of sub-process features, including a first sub-process feature K₁ corresponding to the cup body, a second sub-process feature K₂ corresponding to the bottom surface, a third sub-process feature K₃ corresponding to the cup lid and a fourth sub-process feature K₄ corresponding to the sealing ring. The process steps forming a whole production procedure in the ontology is a set, which contains a plurality of specific process steps, wherein the plurality of process steps have a specific sequence and process step time. In addition, the process step K further corresponds to a plurality of pieces of equipment, and the equipment has a cost, a model type and an equipment type. Wherein, the equipment is a set.

Then, step S23 is performed. A process feature is analyzed to obtain a plurality of process steps related to the production procedure of the process feature in a specific sequence and equipment corresponding to each process step is allocated. Wherein, the rules in the rule base comprise process steps related to the process feature and the production procedure, and a second relationship rule of the equipment corresponding each process step. Therefore, step S23 further comprises the following steps: invoking the second relationship rule in the knowledge base and mapping the process feature into a plurality of process steps related to the production procedure of the process feature in a specific sequence based on the second relationship rule, and invoking the third relationship rule in the knowledge base and allocating corresponding equipment to each process step based on the third relationship rule.

The planning module 240 is a computer aided process planning module and is configured to plan the processes of a whole production procedure according to the process features. That is to say, after each geometric feature, for example, bottom surface 620 or cup body 610, is extracted from the CAD model, it can be recognized only as a flat face or a cylindrical face. However, the flat face cannot immediately be recognized as the bottom surface 620 or the cylindrical face cannot immediately be recognized as the cup body 610. Therefore, it is hard to know how to manufacture these geometric features and the product having these geometric features. The recognition module 230 is configured to sort geometric features and distribute them to different process features so that each geometric feature can correspond to a specific production procedure in the knowledge base 210.

Specifically, the ontology document of the instantiation of the cup 600 is read and the process feature K corresponding to the cup is automatically matched. For example, for the cup body 610, the corresponding radius, height, material and shape of the cup body 610 are automatically recognized during a deduction, and after the mapping of the process features of the cup body 610, the whole production procedure obtained comprises cutting, bulging and cleaning & drying. Wherein, the next process step of cutting is bulging and the next process step of bulging is cleaning & drying. Thus, a plurality of process steps in a specific sequence are obtained. In addition, cutting, bulging and cleaning & drying have process step times, respectively.

Wherein, a plurality of pieces of equipment further corresponds to the process feature K. The equipment set contains a plurality of pieces of equipment, for example, cutting equipment, bulging equipment and cleaning & drying equipment. In the present embodiment, after the above-mentioned whole production procedure of the cup body 610 is planned, each process in the production procedure is mapped to one piece of equipment. Wherein, the cutting step corresponds to the cutting equipment, the bulging step corresponds to the bulging equipment, and the cleaning & drying step corresponds to the cleaning & drying equipment.

In a word, after the above-mentioned analysis and deduction, the process steps related to the whole production procedure of a specific product and information about equipment corresponding to each process step are obtained and a list document containing the above-mentioned information is generated. The content in the list document and the format can be customized as required.

Finally, step S3 is performed. The manufacturing simulation and verification module 300 simulates the whole industrial manufacturing procedure of the product based on the process steps related to the production procedure and the equipment corresponding to each process step and output key performance indexes (KPIs) of the industrial manufacturing procedure.

The manufacturing simulation and verification module 300 is configured to generate a factory model, including production rate, daily overall equipment effectiveness (OEE), operating cost and potential profit based on the production procedure and KPIs which are used for factory simulation calculations and correspond to the product design. The manufacturing simulation and verification module 300 receives process features output by the conversion module 200 and forms a corresponding factory model. Then, the calculation module automatically performs a simulation based on comparisons of parameter features to accurately figure out the production capacity and the cost.

Specifically, the manufacturing simulation and verification module 300 is configured to generate a factory model from a production procedure and perform a factory simulation to calculate KPIs. First, information output by the conversion module 200 to obtain each step of the whole production procedure, including procedure type, process step time, process step sequence, equipment type and cost of expenses, is analyzed. Then, a factory model is generated according to each step and simulation parameters input into the database are obtained. Wherein, the simulation parameters include the quantity of the product to be manufactured, the product type and other simulation-related information. Next, information is loaded into the factory model and a simulation is performed for the factory model. Finally, the KPIs are calculated after the simulation and the KPIs are sent to the database.

The user interface 400 comprises a plurality of web pages, and the user interface can obtain the input on the customer page, present intermediate results from feature extractions, procedure deductions and simulation confirmations and generate a final evaluation through KPI parameter pages. The user interface 400 communicates with the database 500 and the backend component and is used for data storage and information exchange.

Wherein, the user interface 400 is a knowledge-based tool and interacts with the above-mentioned other modules. The user interface 400 comprises five modules, which are the product selection module, the feature extraction module, the procedure analysis module, the simulation confirmation module and the KPI panel, respectively. The product selection module provides a product list, and a product can be added to or deleted from the list or the product list can be updated. Once a product is selected on the user interface 400, the background modules will communicate with each other and transmit information related to the product. The feature extraction module presents the analysis result of the face feature of the extraction module 100. An ontology graph containing production routes and required equipment will be presented in the procedure analysis module, and the production routes and required equipment of two different products can be compared in the graph. The quantity of a product is input into the simulation confirmation module, product information is described as the input of a factory simulation and a product production simulation based on the factory simulation and the communication between background modules, and the start of a simulation is automatically triggered. The factory KPIs, for example, daily expense, daily profit and OEE are presented on the KPI panel.

For example, the production line must be changed to produce a new type of cups. According to the present invention, only the 3-D model of the new type of cups is required to compare the difference and gap between the new type of cups and a traditional type of cups. After the process features are deduced from geometric features and the process features are mapped to manufacturing processes and manufacturing equipment, all processes and equipment in a factory are instantiated, that is to say, the manufacturing capabilities are all instantiated. If no equipment can complete the product production, new equipment needs to be purchased. Therefore, the customer can evaluate the whole production based on the product model.

By utilizing a knowledge structure which is ontological to map the design features of a product model to the production processes of the product and equipment information, the present invention can automatically generate possible process routes and required equipment from a product design. Wherein, the product can be described by use of some design features, for example, geometric features and feature attributes determined from the design model. Secondly, these features can be mapped to a production procedure in which the above-mentioned design features are potentially produced. Wherein, knowledge can continuously be created and can be extended along with time and experience. Therefore, the present invention has a wide application prospect, for example, production procedure recognition of an assembly procedure of a robotic system, in many industrial fields.

In addition, KPIs in production are automatically evaluated based on the production information obtained from a simulation. After the production route and equipment type of a specific product are obtained, a factory model can be generated in a simulation tool. Then, factory KPIs can be simulated and can automatically be calculated in the present invention. Factory KPIs include the type and quantity of the product planned to be produced. The production gap, production capacity and performance criteria from design to production can be automatically and quickly evaluated by use of the present invention.

In a second aspect, the present invention provides a system for evaluating KPIs in production based on a geometric model, wherein the system comprises a processor, and a memory coupled with the processor, the memory having instructions stored therein, the instructions enabling the system to evaluate KPIs in production based on a geometric model to perform actions when executed by the processor, and the actions comprising: S1.extracting a geometric feature and the feature attribute from the product model, S2. converting the geometric feature into a process feature to obtain process steps related to the whole production procedure of producing the product and the equipment corresponding to each process step, and S3. simulating the whole industrial manufacturing procedure of the product based on the process steps related to the production procedure and the equipment corresponding to each process step and outputting key performance indexes (KPIs) of the industrial manufacturing procedure.

Further, Action S2 further comprises: S21. instantiating the geometric feature into a knowledge base, S22. converting the geometric feature into a process feature according to the rules in the knowledge base, and S23. analyzing the process feature to obtain a plurality of process steps related to the production procedure of the process feature in a specific sequence and allocating equipment corresponding to each process step.

Further, the knowledge base comprises an ontology base and a rule base.

Further, the ontology base comprises classes, attributes and instances.

Further, the rule base comprises: a first relationship rule between the geometric feature and the process feature, a plurality of process steps related to the process feature and the production procedure in a specific sequence, and a second relationship rule between each process step and the corresponding equipment.

Further, Action S22 further comprises: invoking the first relationship rule in the knowledge base and matching the geometric feature with the corresponding process feature based on the first relationship rule, and Action S23 further comprises: invoking the second relationship rule in the knowledge base and mapping the process feature into a plurality of process steps related to the production procedure of the process feature in a specific sequence based on the second relationship rule, and invoking the third relationship rule in the knowledge base and allocating corresponding equipment to each process step based on the third relationship rule.

In a third aspect, the present invention provides a device for evaluating KPIs in production based on a geometric model, wherein the device comprises: an extraction module, configured to extract a geometric feature and the feature attribute from the product model, a conversion module, configured to convert the geometric feature into a process feature to obtain process steps related to the whole production procedure of producing the product and the equipment corresponding to each process step, and a simulation module, configured to simulate the whole industrial manufacturing procedure of the product based on the process steps related to the production procedure and the equipment corresponding to each process step and output key performance indexes (KPIs) of the industrial manufacturing procedure.

Further, the conversion module is further configured to: instantiate the geometric feature into a knowledge base, convert the geometric feature into a process feature according to the rules in the knowledge base, and analyze the process feature to obtain a plurality of process steps related to the production procedure of the process feature in a specific sequence and allocate equipment corresponding to each process step.

Further, the rules in the rule base comprise: a first relationship rule between the geometric feature and the process feature, a plurality of process steps related to the process feature and the production procedure in a specific sequence, and a second relationship rule between each process step and the corresponding equipment.

Further, the conversion module is further configured to invoke the first relationship rule in the knowledge base and match the geometric feature with the corresponding process feature based on the first relationship rule, and the simulation module is further configured to invoke the second relationship rule in the knowledge base and map the process feature into a plurality of process steps related to the production procedure of the process feature in a specific sequence based on the second relationship rule, and invoke the third relationship rule in the knowledge base and allocate corresponding equipment to each process step based on the third relationship rule.

In a fourth aspect, the present invention provides a computer program product, the computer program product is tangibly stored in a computer-readable medium and comprises computer executable instructions, and at least one processor is enabled to execute the method according to the first aspect of the present invention when the computer executable instructions are executed.

In a fifth aspect, the present invention provides a computer-readable medium, computer executable instructions are stored in the computer-readable medium, and at least one processor is enabled to execute the method according to the first aspect of the present invention when the computer executable instructions are executed.

Although the content of the present invention has been described in detail through the above-mentioned preferred embodiments, it should be noted that the description above should not be considered as a restriction of the present invention. After those skilled in the art read the content above, various modifications and replacements to the present invention are obvious to them. Therefore, the scope of protection of the present invention should be defined by the attached claims. In addition, any reference numeral in the claims should not be considered a restriction of the claims, the term "comprise" does not exclude other devices or steps not listed in the claims or the description, and the terms "first" and "second" are only used to represent a name, but not to represent any specific sequence.

## Claims

1. A method for evaluating KPIs in production based on a geometric model, wherein the method comprises the following steps:
S1. extracting a geometric feature and the feature attribute from the product model,
S2. converting the geometric feature into a process feature to obtain process steps related to the whole production procedure of producing the product and the equipment corresponding to each process step, and
S3. simulating the whole industrial manufacturing procedure of the product based on the process steps related to the production procedure and the equipment corresponding to each process step and outputting key performance indexes (KPIs) of the industrial manufacturing procedure.

2. The method according to claim 1, **characterized in that** Step S2 further comprises the following steps:
S21. instantiating the geometric feature into a knowledge base,
S22. converting the geometric feature into a process feature according to the rules in the knowledge base, and
S23. analyzing the process feature to obtain a plurality of process steps related to the production procedure of the process feature in a specific sequence and allocating equipment corresponding to each process step.

3. The method according to claim 2, **characterized in that** the knowledge base comprises an ontology base and a rule base.

4. The method according to claim 3, **characterized in that** the ontology base comprises classes, attributes and instances.

5. The method according to claim 3, **characterized in that** the rules in the rule base comprise:
- a first relationship rule between the geometric feature and the process feature,
- a plurality of process steps related to the process feature and the production procedure in a specific sequence, and
- a second relationship rule between each process step and the corresponding equipment.

6. The method according to claim 5, **characterized in that** Step S22 further comprises the following step:
invoking the first relationship rule in the knowledge base and matching the geometric feature with the corresponding process feature based on the first relationship rule, and
Step S23 further comprises the following steps:
invoking the second relationship rule in the knowledge base and mapping the process feature into a plurality of process steps related to the production procedure of the process feature in a specific sequence based on the second relationship rule, and
invoking the third relationship rule in the knowledge base and allocating corresponding equipment to each process step based on the third relationship rule.

7. A system for evaluating KPIs in production based on a geometric model, wherein the system comprises:
a processor, and
a memory coupled with the processor, the memory having instructions stored therein, the instructions enabling the system to evaluate KPIs in production based on a geometric model to perform actions when executed by the processor, and the actions comprising:
S1. extracting a geometric feature and the feature attribute from the product model,
S2. converting the geometric feature into a process feature to obtain process steps related to the whole production procedure of producing the product and the equipment corresponding to each process step, and
S3. simulating the whole industrial manufacturing procedure of the product based on the process steps related to the production procedure and the equipment corresponding to each process step and outputting key performance indexes (KPIs) of the industrial manufacturing procedure.

8. The system according to claim 7, **characterized in that** Action S2 further comprises:
S21. instantiating the geometric feature into a knowledge base,
S22. converting the geometric feature into a process feature according to the rules in the knowledge base, and
S23. analyzing the process feature to obtain a plurality of process steps related to the production procedure of the process feature in a specific sequence and allocating equipment corresponding to each process step.

9. The system according to claim 8, **characterized in that** the knowledge base comprises an ontology base and a rule base.

10. The system according to claim 9, **characterized in that** the ontology base comprises classes, attributes and instances.

11. The system according to claim 9, **characterized in that** the rules in the rule base comprise:
- a first relationship rule between the geometric feature and the process feature,
- a plurality of process steps related to the process feature and the production procedure in a specific sequence, and
- a second relationship rule between each process step and the corresponding equipment.

12. The system according to claim 11, **characterized in that** Action S22 further comprises:
invoking the first relationship rule in the knowledge base and matching the geometric feature with the corresponding process feature based on the first relationship rule, and
Action S23 further comprises:
invoking the second relationship rule in the knowledge base and mapping the process feature into a plurality of process steps related to the production procedure of the process feature in a specific sequence based on the second relationship rule, and
invoking the third relationship rule in the knowledge base and allocating corresponding equipment to each process step based on the third relationship rule.

13. A device for evaluating KPIs in production based on a geometric model, wherein the device comprises:
an extraction module, configured to extract a geometric feature and the feature attribute from the product model,
a conversion module, configured to convert the geometric feature into a process feature to obtain process steps related to the whole production procedure of producing the product and the equipment corresponding to each process step, and
a simulation module, configured to simulate the whole industrial manufacturing procedure of the product based on the process steps related to the production procedure and the equipment corresponding to each process step and output key performance indexes (KPIs) of the industrial manufacturing procedure.

14. The device according to claim 13, **characterized in that** the conversion module is further configured to:
instantiate the geometric feature into a knowledge base,
convert the geometric feature into a process feature according to the rules in the knowledge base, and
analyze the process feature to obtain a plurality of process steps related to the production procedure of the process feature in a specific sequence and allocate equipment corresponding to each process step.

15. The device according to claim 14, **characterized in that** the rules in the rule base comprise:
- a first relationship rule between the geometric feature and the process feature,
- a plurality of process steps related to the process feature and the production procedure in a specific sequence, and
- a second relationship rule between each process step and the corresponding equipment.

16. The device according to claim 15, **characterized in that** the conversion module is further configured to:
invoke the first relationship rule in the knowledge base and match the geometric feature with the corresponding process feature based on the first relationship rule, and
the simulation module is further configured to
invoke the second relationship rule in the knowledge base and map the process feature into a plurality of process steps related to the production procedure of the process feature in a specific sequence based on the second relationship rule, and
invoke the third relationship rule in the knowledge base and allocate corresponding equipment to each process step based on the third relationship rule.

17. A computer program product, the computer program product being tangibly stored in a computer-readable medium and comprising computer executable instructions, and at least one processor being enabled to execute the method as claimed in any of claims 1 to 6 when the computer executable instructions are executed.

18. A computer-readable medium, computer executable instructions being stored in the computer-readable medium, and at least one processor being enabled to execute the method as claimed in any of claims 1 to 6 when the computer executable instructions are executed.
